# EUROPEAN PATENT APPLICATION

(11) **EP 4 390 825 A1**
(43) Date of publication of application: **26.06.2024**
(21) Application number: 23216447.5
(22) Date of filing: 13.12.2023
(51) Int. Cl.: G06Q 40/04, G06Q 40/03, G06Q 20/06, H04L 9/00

(54) **METHOD OF ALLOWING SELECTABLE CURRENCY WITHIN AN ACCOUNT**

(30) Priority: 20.12.2022 US 202218084829
(71) Applicant: American Express Travel Related Services Co., Inc., New York, NY 10285-4900 (US)
(72) Inventor: BODELL, Matthew Stephen, New York, NY 10285 (US); CRUZ-HERRERA, Jaime A., New York, NY 10285 (US)
(74) Representative: Sackin, Robert

(57) **Abstract**

Disclosed are various embodiments for allowing selectable currency within an account. In at least some embodiments, a system (106) can receive a first request to exchange central bank digital currencies, CBDCs, within a collateral account from a first CBDC denomination to a second CBDC denomination. The system can then obtain, from a market application (151), an exchange rate that can be used to calculate an exchange between the first CBDC denomination and the second CBDC denomination. The system (106) can identify a first amount of the first CBDC denomination within the collateral account and calculate a second amount of the second CBDC denomination. The system (106) can obtain the second amount of the second CBDC denomination and credit the second amount of the second CBDC denomination to the collateral account. The system (106) can also debit the first amount of the first CBDC denomination from the collateral account.

## Description

### CROSS-REFERENCE TO RELATED APPLICATIONS

This application claims priority to and the benefit of, co-pending U.S. Patent Application 18/084,829, entitled "METHOD OF ALLOWING SELECTABLE CURRENCY WITHIN AN ACCOUNT" and filed on December 20, 2022, which is incorporated by reference as if set forth herein in its entirety.

### BACKGROUND

A central bank digital currency (CBDC) is a digital currency that is issued by a government entity, such as a central bank, a reserve bank, or a state monetary authority. Accordingly, the government for each country or the monetary unions for a collection of countries (e.g., the Eurozone) can have a unique CBDC for their citizens to use in their respective markets. As a result, each government or monetary union may develop a different implementation of their CBDC.

### BRIEF DESCRIPTION OF THE DRAWINGS

Many aspects of the present disclosure can be better understood with reference to the following drawings. The components in the drawings are not necessarily to scale, with emphasis instead being placed upon clearly illustrating the principles of the disclosure. Moreover, in the drawings, like reference numerals designate corresponding parts throughout the several views.
FIG. 1 is a drawing depicting a computing environment in a network environment as one of several embodiments of the present disclosure.
FIG. 2 is a flowchart illustrating one example of functionality implemented as portions of an application executed in a computing environment in the network environment of FIG. 1 according to various embodiments of the present disclosure.
FIG. 3 is a flowchart illustrating one example of functionality implemented as portions of an application executed in a computing environment in the network environment of FIG. 1 according to various embodiments of the present disclosure.

### DETAILED DESCRIPTION

Disclosed are various approaches for allowing selectable currency within an account. As CBDCs are developed by government entities, financial service providers will need mechanisms for integrating CBDCs into payment processing rails that allow for payments to be made in a particular CBDC or another digital currency. A payment processing rail can refer to a technology platform or a payment network that moves money from a payer to a payee. Some non-limiting examples of a payment processing rail include payment card rails (e.g., credit and debit cards), automated clearing houses, real-time gross settlement (RTGS) systems, and proprietary payment services such as PayPal^{®}, Venmo^{®}, Zelle^{®}, and many others. Further, the payment processing rails for each country can involve different currencies.

A problem currently exists that banks or other financial institutions typically hold balances for their consumers in a single denomination of currency. For example, a financial institution may allow for its patrons to hold Bitcoin, Ethereum, United States Dollars, Chinese Yuan, Japanese Yen, British Pounds, or Euro Dollars as a primary balance in their accounts. With the rise of digital currencies and CBDCs as well as the rise in global instability in global currencies, a need exists for users to be able to swiftly exchange their funds from one currency denomination to another currency denomination. However, users are required to exchange currencies through digital exchanges that can be complicated and overwhelming to everyday users.

Additionally, balances held by the financial institutions could be in the form of collateral for a loan or other collateralized instruments. A person may have offered up a certain amount of a digital currency as collateral for a loan in a physical denomination, like United States Dollars, or in a digital denomination, like a different digital currency. However, due to the volatility in global currencies, the collateral that was offered as security for the collateralized instrument may vary drastically in value at any given point in time. A financial institution may find that the digital currency falls beneath a threshold chosen to liquidate the collateral to ensure the financial institution has not lost all the value in the security.

Embodiments of the present disclosure are directed to allowing selectable currency within an account. In at least one embodiment, users can swiftly exchange their balances among CBDCs and digital currencies. In at least another embodiment, users can exchange balances held as collateral as a means to ensure their respective financial instruments remain safe from changing prices in global currency markets.

In the following discussion, a general description of the system and its components is provided, followed by a discussion of the operation of the same. Although the following discussion provides illustrative examples of the operation of various components of the present disclosure, the use of the following illustrative examples does not exclude other implementations that are consistent with the principals disclosed by the following illustrative examples.

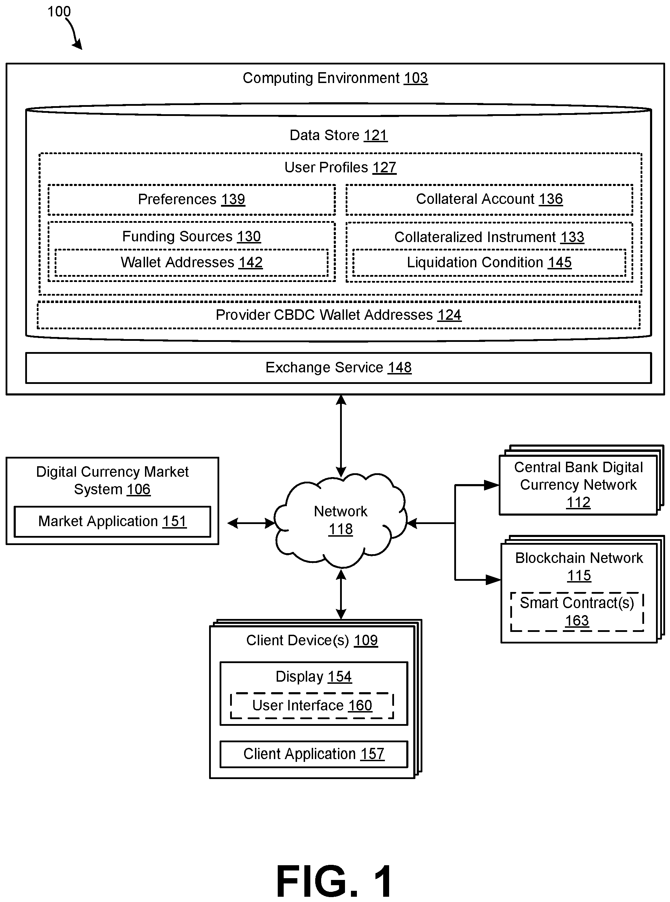

With reference to FIG. 1, shown is a network environment 100 according to various embodiments. The network environment 100 can include a computing environment 103, a digital currency market system 106, a client device 109, a central bank digital currency (CBDC) network 112, and a blockchain network 115, which can be in data communication with each other via a network 118.

The network 118 can include wide area networks (WANs), local area networks (LANs), personal area networks (PANs), or a combination thereof. These networks can include wired or wireless components or a combination thereof. Wired networks can include Ethernet networks, cable networks, fiber optic networks, and telephone networks such as dial-up, digital subscriber line (DSL), and integrated services digital network (ISDN) networks. Wireless networks can include cellular networks, satellite networks, Institute of Electrical and Electronic Engineers (IEEE) 802.11 wireless networks (e.g., WI-FI^{®}), BLUETOOTH^{®} networks, microwave transmission networks, as well as other networks relying on radio broadcasts. The network 118 can also include a combination of two or more networks 118. Examples of networks 118 can include the Internet, intranets, extranets, virtual private networks (VPNs), and similar networks.

The computing environment 103 can include one or more computing devices that include a processor, a memory, and/or a network interface. For example, the computing devices can be configured to perform computations on behalf of other computing devices or applications. As another example, such computing devices can host and/or provide content to other computing devices in response to requests for content.

Moreover, the computing environment 103 can employ a plurality of computing devices that can be arranged in one or more server banks or computer banks or other arrangements. Such computing devices can be located in a single installation or can be distributed among many different geographical locations. For example, the computing environment 103 can include a plurality of computing devices that together can include a hosted computing resource, a grid computing resource, or any other distributed computing arrangement. In some cases, the computing environment 103 can correspond to an elastic computing resource where the allotted capacity of processing, network, storage, or other computing-related resources can vary over time.

Various data is stored in a data store 121 that is accessible to the computing environment 103. The data store 121 can be representative of a plurality of data stores 121, which can include relational databases or non-relational databases, such as object-oriented databases, hierarchical databases, hash tables or similar key-value data stores, as well as other data storage applications or data structures. Moreover, combinations of these databases, data storage applications, and/or data structures may be used together to provide a single, logical, data store. The data stored in the data store 121 is associated with the operation of the various applications or functional entities described below. This data can include provider CBDC wallet addresses 124, user profiles 127, and potentially other data.

The provider CBDC wallet address 124 can be used for performing digital currency transactions at the CBDC network 112 on behalf of a financial service provider or on behalf of users who do not have a wallet address 142. The provider CBDC wallet address 124 can be associated with public and private keys. In some scenarios, the computing environment 103 can have a provider CBDC wallet address 124 for each different CBDC type. For example, a first provider CBDC wallet address 124 can be used for a United States CBDC network 112 and a second provider CBDC wallet address 124 can be used for a European Union CBDC network 112.

A user profile 127 can represent a profile or an account of a user or merchant at the computing environment 103. In some examples, the computing environment 103 can be managed by an entity (e.g., a financial service provider) that provides services to various users and merchants. The user profile 127 can include funding sources 130, collateralized instruments 133, collateral accounts 136, preferences 139, and/or other suitable data.

The funding sources 130 can represent one or more financial accounts that are managed by or associated with the user. The funding sources 130 can include client wallet addresses 142 (e.g., CBDC wallets for one or more CBDC networks 112, wallets for one or more digital currencies for one or more blockchain networks 115, *etc.*)*,* credit card accounts, debit accounts, loyalty point accounts, a line of credit, or other suitable financial accounts. In some examples, one or more funding sources 130 can be configured to be automatically assigned to certain transactions. In some examples, the funding sources 130 can include data associated with one or more client wallet addresses 142.

A collateralized instrument 133 can represent financial instruments, negotiable or non-negotiable, which requires an obligation for a person to pay any liabilities in connection with the document. For example, a collateralized instrument 133 can include a loan, a security, a payment instrument (such as a credit card, charge card, or debit card). Collateralized instruments 133 typically retain instances of collateral on an associated collateral account 136 as security. A collateralized instrument 133 can include a liquidation condition 145. A liquidation condition 145 is a condition that, when met, will liquidate the contents of the associated collateral account 136 as a means to repay the collateralized instrument 133. For example, a liquidation condition 145 could have a value threshold and the liquidation condition 145 could be explained as determining that if the current value of the assets in the corresponding collateral account 136 fall beneath the value threshold, then the liquidation condition 145 would be satisfied.

A collateral account 136 is an account held by the lender of the collateralized instrument 133 to be used as security if conditions are met. The collateral account 136 can be represented as a ledger in a financial institution or as a wallet to hold digital currencies. A collateral account 136 can facilitate transfers of instances of collateral upon request.

The preferences 139 can represent settings for facilitating the selection of funding sources 130 for the client device 109. For example, the preferences 139 can indicate a selected assignment of a particular funding source 130. In some examples, the preferences 139 can include rules for determining the appropriate funding source 130 for a particular transaction. For instance, a transaction can be assigned to a first wallet address 142 based at least in part on an amount of the transaction being less than a monetary amount (e.g., less than $100). In another example, a second wallet address 142 can be assigned based at least in part on the transaction type, such as an online transaction. Thus, the transaction type can be used to determine the funding source 130.

Additionally, the preferences 139 can include settings for facilitating the selection of funding sources 130 or wallet addresses 142 for which payments are made. In at least one embodiment, a merchant account can have preferences 139 that indicate that at least a portion of the payments made for a particular item, product, good, or service should be split among one or more funding sources 130 and that the transaction should be split among one or more wallet addresses 142. In at least another embodiment, the preferences 139 can include an indication to send at least a portion of the transaction amount to a wallet address 142 that is not one of the merchant's funding sources 130, but instead a third-party funding source 130. This allows a merchant to split transactions into microtransactions and automatically provide funding to their vendors or stakeholders in the supply chain.

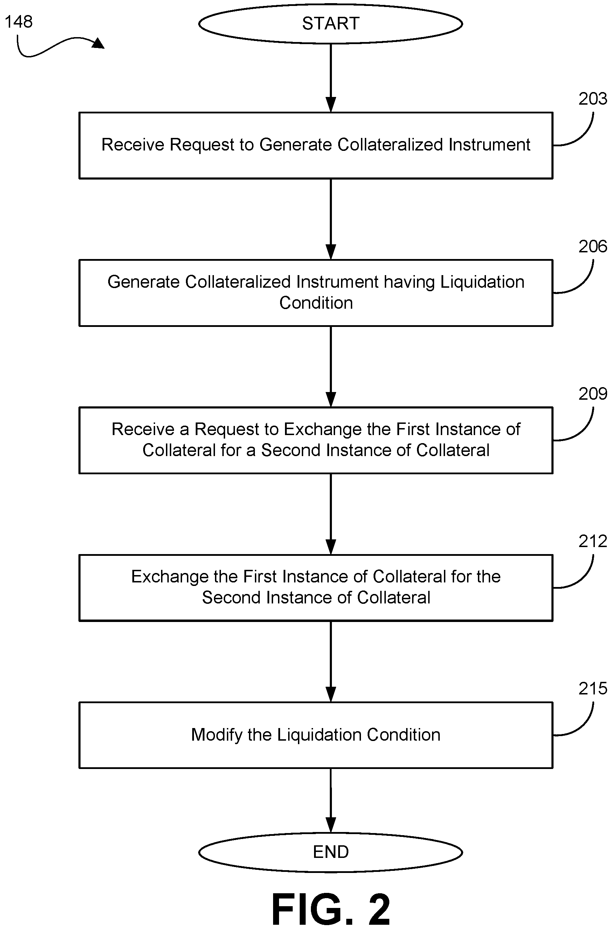

Also, various applications or other functionality can be executed in the computing environment 103. The components executed on the computing environment 103 include the exchange service 148, and other applications, services, processes, systems, engines, or functionality not discussed in detail herein. The exchange service 148 can be executed to facilitate the exchange of one type of currency for another type of currency on behalf of a user. Further explanation of processes performed by the exchange service 148 are depicted in the description of FIGS. 2-3.

The digital currency market system 106 can include one or more computing devices that include a processor, a memory, and/or a network interface. For example, the computing devices can be configured to perform computations on behalf of other computing devices or applications. As another example, such computing devices can host and/or provide content to other computing devices in response to requests for content.

Moreover, the digital currency market system 106 can employ a plurality of computing devices that can be arranged in one or more server banks or computer banks or other arrangements. Such computing devices can be located in a single installation or can be distributed among many different geographical locations. For example, the digital currency market system 106 can include a plurality of computing devices that together can include a hosted computing resource, a grid computing resource, or any other distributed computing arrangement. In some cases, the digital currency market system 106 can correspond to an elastic computing resource where the allotted capacity of processing, network, storage, or other computing-related resources can vary over time.

The digital currency market system 106 can be representative of a market to exchange digital currency. Such a digital currency market system 106 can be a public or private, centralized or decentralized, and/or custodial or non-custodial market. In at least one embodiment, the digital currency market system 106 is representative of a decentralized, non-custodial liquidity market. Examples of markets include Gemini^{®}, Crypto.com^{®}, Coinbase^{®}, and other digital coin marketplaces. In at least some embodiments, the digital currency market system 106 can communicate, trade, or exchange digital currencies through various protocols, such as Aave, Uniswap protocol, and/or other protocols.

The digital currency market system 106 can be configured to execute various applications such as a market application 151 or other applications. The market application 151 can be executed to buy, sell, and/or transfer digital currency. The market application 151 can receive requests to purchase a specific amount of a selected currency. The market application 151 can process the request and initiate a transfer on the appropriate network (e.g., a CBDC network 112, a blockchain network 115, *etc.*)*.* The market application 151 can also be configured to provide exchange rate information. For example, a market application 151 can receive a request to obtain an exchange rate between a first digital currency and a second digital currency. The market application 151 can send an exchange rate that corresponds to a fair market value between the first digital currency and a second digital currency.

The client device 109 is representative of a plurality of client devices that can be coupled to the network 118. The client device 109 can include a processor-based system such as a computer system. Such a computer system can be embodied in the form of a personal computer (e.g., a desktop computer, a laptop computer, or similar device), a mobile computing device (*e.g*., personal digital assistants, cellular telephones, smartphones, web pads, tablet computer systems, music players, portable game consoles, electronic book readers, and similar devices), media playback devices (*e.g*., media streaming devices, BluRay^{®} players, digital video disc (DVD) players, set-top boxes, and similar devices), a videogame console, or other devices with like capability. In at least some embodiments, a client device 109 can also be embodied in the form of an internet of things (lOT) device, such as an internet-enabled device, like an automobile, a refrigerator, a thermostat, a light switch, or any other device connected to the internet. The client device 109 can include one or more displays 154, such as liquid crystal displays (LCDs), gas plasma-based flat panel displays, organic light emitting diode (OLED) displays, electrophoretic ink ("E-ink") displays, projectors, or other types of display devices. In some instances, the display 154 can be a component of the client device 109 or can be connected to the client device 109 through a wired or wireless connection. The client device 109 can include a memory for storing application data.

The client device 109 can be configured to execute various applications such as a client application 157 or other applications. The client application 157 can be executed to perform wallet functionality for executing CBDC transactions, storing, and other payment related functions. In some examples, the client application 157 can be used to sign (*e.g.*, generate digital signatures) transaction transfers with a private key associated with the wallet address 142.

Additionally, the client application 157 can be executed in a client device 109 to access network content served up by the computing environment 103 or other servers, thereby rendering a user interface 160 on the display 154. To this end, the client application 157 can include a browser, a dedicated application, or another executable, and the user interface 160 can include a network page, an application screen, or another user mechanism for obtaining user input. The client device 109 can be configured to execute applications beyond the client application 157 such as email applications, social networking applications, word processors, spreadsheets, or other applications.

The CBDC network 112 can present an implementation of a central bank digital currency that is backed by one or more government entities. In some examples, the CBDC network 112 is implemented as a database that maintains records of transactions. For instance, the CBDC network 112 can be implemented as a blockchain network. In some example implementations, the CBDC network 112 can include a public blockchain, a private blockchain, a combination of private and public blockchain components, or other suitable arrangements. Each territory or country may have a different CBDC network 112 with a different implementation.

In some examples, the CBDC network 112 can be an account-based CBDC network, a token-based CBDC network, or other suitable CBDC network implementations. In an account-based CBDC network, the originator (*e.g*., the sending user) and beneficiary (*e.g.*, the recipient user) of a transaction approve a transaction on the basis of user identities. In this non-limiting example, the transactions in account-based CBDC network architecture can have direct attributes to identity-based accounts. In a token-based example, the originator (*e.g*., the sending user) and beneficiary (*e.g.*, the recipient user) can use digital signatures and public-private key pairs for approving transactions that are submitted to the CBDC network 112.

A blockchain network 115 can host a variety of smart contracts 163. A smart contract 163 can represent executable computer code that can be executed by a node of a blockchain network 115. In many implementations, a smart contract 163 can expose one or more functions that can be called by any user or by a limited set of users. To execute one or more functions of a smart contract 163, an application or another smart contract 163, can submit a request to a node of a blockchain network 115 to execute the function. The node can then execute the function and either return the result to the application or store the resulting change in the state of a blockchain network 115 to the blockchain network 115. Nodes may charge fees in the form of cryptocurrency coins or tokens to execute a function and store the output, with more complicated or extensive functions requiring larger fees. An example of this implementation is the ETHEREUM blockchain network, where users can pay fees, referred to as "gas," to have a node of the ETHEREUM blockchain network execute the function and store the result to the ETHEREUM blockchain. Additionally, the more "gas" a user pays, the more quickly the function will be executed, and its results committed to the ETHEREUM blockchain.

Referring next to FIG. 2, shown is a flowchart that provides one example of the operation of a portion of the exchange service 148. The flowchart of FIG. 2 provides merely an example of the many different types of functional arrangements that can be employed to implement the operation of the depicted portion of the exchange service 148. As an alternative, the flowchart of FIG. 2 can be viewed as depicting an example of elements of a method implemented within the network environment 100.

Beginning with block 203, the exchange service 148 can receive a request to generate a collateralized instrument 133. This request represents the creation of a collateralized instrument 133 for a user profile 127 that would be associated with a collateral account 136. In some embodiments, the request to generate the collateralized instrument 133 can include an identifier for a user profile 127, an identifier for a collateral account 136, a type of currency denomination for the instance of collateral to be held in the collateral account 136, an identifier for a funding source 130, a wallet address 142, amounts related to loan details, such as amount of a loan for the collateralized instrument 133 and interest rates, and/or information related to a liquidation condition 145, such as a threshold amount which triggers the liquidation of the collateralized instrument 133. In at least some embodiments, the request can also include directions to generate a collateral account 136, which can include information such as user information, user preferences 139, or other information. The request could be received from the client device 109 or a digital currency market system 106.

Next, at block 206, the exchange service 148 can generate a collateralized instrument 133 having a liquidation condition 145. Based on the data received with the request in block 203, the exchange service 148 can generate a collateralized instrument 133 having at least one liquidation condition 145. In many embodiments, the exchange service 148 can gather information related to a loan, including the information collected in block 203, and store the information with relation to a user profile 127. If a collateral account 136 has not been opened for the collateralized instrument 133, the collateral account 136 can be opened to store an instance of collateral in whatever form it may be held. In some embodiments, information received in the request of block 203 can be used in the creation of the collateral account 136. The collateral account 136 can be associated with the collateralized instrument 133.

In at least one embodiment, the collateralized instrument 133 can be stored as a smart contract 163 on a blockchain network 115. In such an embodiment, the smart contract 163 can be configured to receive transfer requests to transfer an instance of digital collateral to and from a collateral account 136. The requests can include accounts or funding sources 130 to send the collateral, accounts or funding sources 130 from which the instance of collateral will be sent, an identifier for a collateral account 136, and/or an identifier for the collateralized instrument 133. In such an embodiment, the smart contract 163 can be configured to determine if the liquidation condition is met. The smart contract can be configured to include the liquidation condition 145 and the smart contract 163 can periodically test the liquidation condition 145. If the liquidation condition 145 is met, the smart contract 163 can send a request to the exchange service 148 to liquidate the account. In another embodiment, the smart contract 163 can include instructions to liquidate the collateral account 136, including crediting the collateral account 136 and sending the instance of collateral to the market application 151. In another embodiment, the smart contract 163 can be configured to receive liquidation condition modification requests that include instructions to modify a liquidation condition 145. In at least one embodiment, once an instance of collateral has been exchanged, the liquidation condition 145 must also be changed to appropriately determine whether the collateralized instrument 133 should be liquidated. Accordingly, the smart contract 163 can be configured to receive requests to modify the liquidation condition 145.

Next, at block 209, the exchange service 148 can receive a request to exchange the first instance of collateral for a second instance of collateral in a collateral account 136. The request to exchange can be a request to exchange a portion or the entirety of the first instance of collateral in the collateral account 136 for a second instance of collateral to be stored in the collateral account 136. The request to exchange can include information including the currency denomination for the second instance of collateral, a funding source 130 or a wallet address 142 for the first instance of collateral to be sent to, and/or other data.

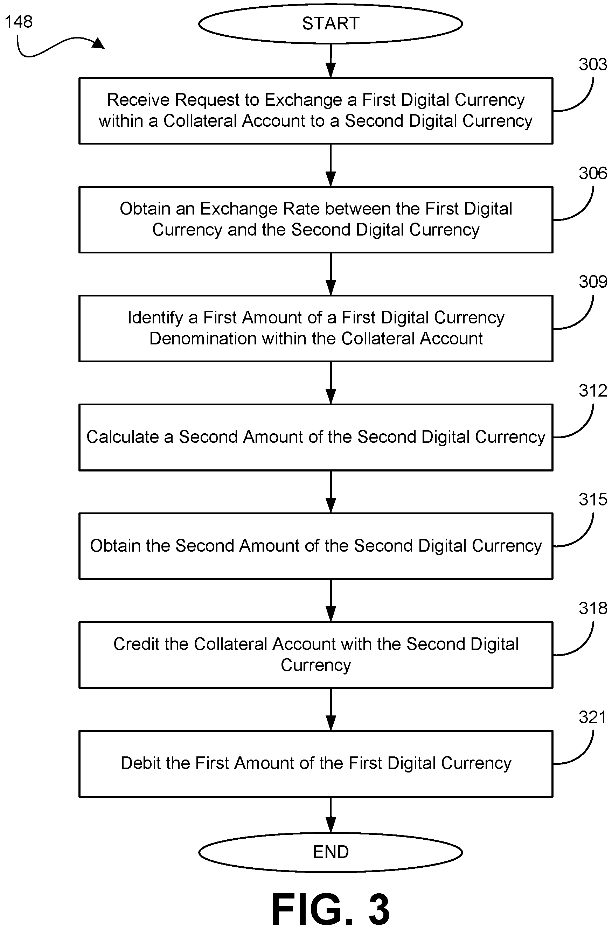

Next, at block 212, the exchange service 148 can exchange the first instance of collateral for the second instance of collateral in the collateral account 136. In at least one embodiment, the exchange service 148 can send a request to the market application 151 on the digital currency market system 106 requesting an exchange rate between denominations of the first instance of collateral and denominations of the second instance of collateral. The market application 151 can respond including an exchange rate. The exchange service 148 can obtain the second amount of the second digital currency. Then, the exchange service 148 can credit the collateral account 136 with the second digital currency. Finally, the exchange service 148 can debit the first amount of the first digital currency. Further explanation of this embodiment of block 212 is further explained in blocks 303-321 of FIG. 3.

In at least one embodiment where a collateralized instrument 133 is stored as a smart contract 163 on a blockchain network 115, the exchange service 148 can send a transfer request to the smart contract 163 to transfer the first instance of collateral from the smart contract 163 to a funding source 130. In such a situation, the exchange service 148 can also send a transfer request to the smart contract 163 to transfer the second instance of collateral from a funding source 130 to the smart contract 163. The funding source 130 can be used to transfer to and from the smart contract can be determined from the information received at block 209. In at least one embodiment, in response to sending the requests, the exchange service 148 can receive a response from the smart contract 163 indicating that a transfer has occurred. In at least another embodiment, in response to sending the requests, the exchange service 148 can receive a response from the smart contract 163 including the first instance of collateral.

Next, at block 215, the exchange service 148 can modify the liquidation condition 145. In at least some embodiments, the first instance of collateral and the second instance of collateral are not exchanged at a 1:1 exchange rate, so the amount of the second instance of collateral differs from the amount of the first instance of collateral. In such a situation, the liquidation condition 145 may likely be stale or invalid with respect to the second instance of collateral which now occupies the collateral account 136. In at least one embodiment, the exchange service 148 can send a request to the market application 151 to obtain an exchange rate between the first instance of collateral denomination and the second instance of collateral denomination, which can be received by the exchange service 148. The exchange service 148 can calculate a second threshold value by multiplying the first threshold value of the liquidation condition 145 with the exchange rate. In at least some embodiments, the second threshold value can be stored with the liquidation condition 145 and be used to determine when the collateralized instrument 133 should be liquidated. In at least some embodiments, the exchange service 148 can send a request to a smart contract 163 on the distributed blockchain network 115 to modify the liquidation condition 145 with the second threshold value. Once the exchange service 148 has modified the liquidation condition 145, the flowchart of FIG. 2 can end.

Referring next to FIG. 3, shown is another flowchart that provides one example of the operation of a portion of the exchange service 148. The flowchart of FIG. 3 provides merely an example of the many different types of functional arrangements that can be employed to implement the operation of the depicted portion of the exchange service 148. As an alternative, the flowchart of FIG. 3 can be viewed as depicting an example of elements of a method implemented within the network environment 100. As yet another alternative, the flowchart of FIG. 3 can be viewed as depicting the individual substeps taken during the execution of block 212 of FIG. 2.

Beginning with block 303, the exchange service 148 can receive a request to exchange a first digital currency within a collateral account 136 to a second digital currency. The request to exchange can be a request to exchange a portion or the entirety of the first digital currency for a second digital currency. The request to exchange can include information including currency denominations, funding sources 130, wallet addresses 142, and/or other data.

Next, at block 306, the exchange service 148 can obtain an exchange rate between the first digital currency and the second digital currency. In at least some embodiments, the exchange service 148 can send a request to the market application 151 of the digital currency market system 106 to obtain an exchange rate between the first digital currency and the second digital currency, which the exchange service 148 can receive. In at least some embodiments, the request to the market application 151 can include identifiers for each denomination of the first digital currency and the second digital currency.

Next, at block 309, the exchange service 148 can identify a first amount of a first digital currency denomination within the collateral account 136. The exchange service 148 can read information about the collateral account 136 to identify the first amount of the first digital currency denomination within the collateral account 136. The first amount of the first digital currency denomination can be less than the total amount of an instance of collateral stored in the collateral account 136.

Next, at block 312, the exchange service 148 can calculate a second amount of the second digital currency. In at least one embodiment, calculating the second amount of the second CBDC denomination is performed by at least multiplying the first amount by the exchange rate. In at least another embodiment, the exchange rate is given as a ratio of numbers like "5:2" rather than a number "2.5." In such situations, the exchange service 148 can multiply by the first number in the ratio and divide by the second number in the ratio. Other calculations may be used to yield the result of an equivalent exchange from a first digital currency denomination to a second digital currency denomination.

Next, at block 315, the exchange service 148 can obtain the second amount of the second digital currency. In at least one embodiment, the exchange service 148 can obtain the second amount of the second digital currency from the market application 151 of the digital currency market system 106. In such an embodiment, the exchange service 148 can purchase at least the second amount of the second digital currency and have the market application transfer the digital currency to a provider CBDC wallet address 124 or a wallet address 142. The market application 151 can send a request to a CBDC network 112 or a blockchain network 115 to complete the transfer of the second amount of the second digital currency.

Next, at block 318, the exchange service 148 can credit the collateral account 136 with the second digital currency. By crediting, an amount of a currency denomination will be added to the collateral account 136. In many embodiments, the amount added to the collateral account 136 will correspond to the second amount of the second digital currency.

Next, at block 321, the exchange service 148 can debit the first amount of the first digital currency. By debiting the first amount of the first digital currency, that portion of the original instance of collateral will be removed from the collateral account 136. The first amount of the first digital currency can be subsequently credited to a funding source 130, a wallet address 142, or a provider CBDC wallet address 124. Once the exchange service 148 has debited the first amount of the first digital currency, the flowchart of FIG. 3 ends.

A number of software components previously discussed are stored in the memory of the respective computing devices and are executable by the processor of the respective computing devices. In this respect, the term "executable" means a program file that is in a form that can ultimately be run by the processor. Examples of executable programs can be a compiled program that can be translated into machine code in a format that can be loaded into a random access portion of the memory and run by the processor, source code that can be expressed in proper format such as object code that is capable of being loaded into a random access portion of the memory and executed by the processor, or source code that can be interpreted by another executable program to generate instructions in a random access portion of the memory to be executed by the processor. An executable program can be stored in any portion or component of the memory, including random access memory (RAM), read-only memory (ROM), hard drive, solid-state drive, Universal Serial Bus (USB) flash drive, memory card, optical disc such as compact disc (CD) or digital versatile disc (DVD), floppy disk, magnetic tape, or other memory components.

The memory includes both volatile and nonvolatile memory and data storage components. Volatile components are those that do not retain data values upon loss of power. Nonvolatile components are those that retain data upon a loss of power. Thus, the memory can include random access memory (RAM), read-only memory (ROM), hard disk drives, solid-state drives, USB flash drives, memory cards accessed via a memory card reader, floppy disks accessed via an associated floppy disk drive, optical discs accessed via an optical disc drive, magnetic tapes accessed via an appropriate tape drive, or other memory components, or a combination of any two or more of these memory components. In addition, the RAM can include static random-access memory (SRAM), dynamic random-access memory (DRAM), or magnetic random-access memory (MRAM) and other such devices. The ROM can include a programmable read-only memory (PROM), an erasable programmable read-only memory (EPROM), an electrically erasable programmable read-only memory (EEPROM), or other like memory device.

Although the applications and systems described herein can be embodied in software or code executed by general purpose hardware as discussed above, as an alternative the same can also be embodied in dedicated hardware or a combination of software/general purpose hardware and dedicated hardware. If embodied in dedicated hardware, each can be implemented as a circuit or state machine that employs any one of or a combination of a number of technologies. These technologies can include, but are not limited to, discrete logic circuits having logic gates for implementing various logic functions upon an application of one or more data signals, application specific integrated circuits (ASICs) having appropriate logic gates, field-programmable gate arrays (FPGAs), or other components, *etc.* Such technologies are generally well known by those skilled in the art and, consequently, are not described in detail herein.

The flowcharts show the functionality and operation of an implementation of portions of the various embodiments of the present disclosure. If embodied in software, each block can represent a module, segment, or portion of code that includes program instructions to implement the specified logical function(s). The program instructions can be embodied in the form of source code that includes human-readable statements written in a programming language or machine code that includes numerical instructions recognizable by a suitable execution system such as a processor in a computer system. The machine code can be converted from the source code through various processes. For example, the machine code can be generated from the source code with a compiler prior to execution of the corresponding application. As another example, the machine code can be generated from the source code concurrently with execution with an interpreter. Other approaches can also be used. If embodied in hardware, each block can represent a circuit or a number of interconnected circuits to implement the specified logical function or functions.

Although the flowcharts show a specific order of execution, it is understood that the order of execution can differ from that which is depicted. For example, the order of execution of two or more blocks can be scrambled relative to the order shown. Also, two or more blocks shown in succession can be executed concurrently or with partial concurrence. Further, in some embodiments, one or more of the blocks shown in the flowcharts can be skipped or omitted. In addition, any number of counters, state variables, warning semaphores, or messages might be added to the logical flow described herein, for purposes of enhanced utility, accounting, performance measurement, or providing troubleshooting aids, *etc.* It is understood that all such variations are within the scope of the present disclosure.

Also, any logic or application described herein that includes software or code can be embodied in any non-transitory computer-readable medium for use by or in connection with an instruction execution system such as a processor in a computer system or other system. In this sense, the logic can include statements including instructions and declarations that can be fetched from the computer-readable medium and executed by the instruction execution system. In the context of the present disclosure, a "computer-readable medium" can be any medium that can contain, store, or maintain the logic or application described herein for use by or in connection with the instruction execution system. Moreover, a collection of distributed computer-readable media located across a plurality of computing devices (e.g., storage area networks or distributed or clustered filesystems or databases) may also be collectively considered as a single non-transitory computer-readable medium.

The computer-readable medium can include any one of many physical media such as magnetic, optical, or semiconductor media. More specific examples of a suitable computer-readable medium would include, but are not limited to, magnetic tapes, magnetic floppy diskettes, magnetic hard drives, memory cards, solid-state drives, USB flash drives, or optical discs. Also, the computer-readable medium can be a random-access memory (RAM) including static random access memory (SRAM) and dynamic random access memory (DRAM), or magnetic random access memory (MRAM). In addition, the computer-readable medium can be a read-only memory (ROM), a programmable read-only memory (PROM), an erasable programmable read-only memory (EPROM), an electrically erasable programmable read-only memory (EEPROM), or other type of memory device.

Further, any logic or application described herein can be implemented and structured in a variety of ways. For example, one or more applications described can be implemented as modules or components of a single application. Further, one or more applications described herein can be executed in shared or separate computing devices or a combination thereof. For example, a plurality of the applications described herein can execute in the same computing device, or in multiple computing devices in the same computing environment 103.

Disjunctive language such as the phrase "at least one of X, Y, or Z," unless specifically stated otherwise, is otherwise understood with the context as used in general to present that an item, term, *etc.,* can be either X, Y, or Z, or any combination thereof (*e.g.*, X; Y; Z; X or Y; X or Z; Y or Z; X, Y, or Z; *etc*.). Thus, such disjunctive language is not generally intended to, and should not, imply that certain embodiments require at least one of X, at least one of Y, or at least one of Z to each be present.

It should be emphasized that the above-described embodiments of the present disclosure are merely possible examples of implementations set forth for a clear understanding of the principles of the disclosure. Many variations and modifications can be made to the above-described embodiments without departing substantially from the principles of the disclosure. All such modifications and variations are intended to be included herein within the scope of this disclosure and protected by the following claims.

Various embodiments of the present disclosure are described in the following clauses. Although the following clauses describe some embodiments of the present disclosure, other embodiments of the present disclosure are also set forth above.

Clause 1 - A system, comprising a computing device comprising a processor and a memory; and machine-readable instructions stored in the memory that, when executed by the processor, cause the computing device to at least receive a request to generate a collateralized instrument, the collateralized instrument being associated with a collateral account that comprises a first instance of collateral of a first digital asset type and the collateralized instrument being associated with a liquidation condition that corresponds to the first digital asset type; generate the collateralized instrument associated with the collateral account, the collateralized instrument including the liquidation condition; receive a request to exchange the first instance of collateral for a second instance of collateral, wherein the second instance of collateral is a second digital asset type; exchange the first instance of collateral for the second instance of collateral; and modify the liquidation condition of the collateralized instrument to correspond to the second digital asset type.

Clause 2 - The system of clause 1, wherein the machine-readable instructions that generate the collateralized instrument, when executed by the processor, cause the computing device to at least generate a smart contract that is stored on a blockchain network, the smart contract being representative of the collateralized instrument, wherein the smart contract is configured to at least receive transfer requests to transfer digital collateral; determine if the liquidation condition is met; and receive condition modification requests to modify the liquidation condition.

Clause 3 - The system of clause 2, wherein the machine-readable instructions that exchange the first instance of collateral for the second instance of collateral, when executed by the processor, cause the computing device to at least send, to the smart contract, a transfer request comprising the second instance of collateral; and receive, from the smart contract, a transfer response comprising the first instance of collateral.

Clause 4 - The system of clause 2 or 3, wherein the liquidation condition includes at least a condition that determines that a value of the first instance of collateral is less than a threshold value.

Clause 5 - The system of clause 4, wherein the threshold value is a first threshold value and the machine-readable instructions that modify the liquidation condition of the collateralized instrument, when executed by the processor, cause the computing device to at least calculate a second threshold value based on an exchange rate between the first digital asset type and the second digital asset type; and send, to the smart contract, a condition modification request comprising an identifier for the second digital asset type and a second threshold value.

Clause 6 - The system of any of clauses 1-5, wherein the machine-readable instructions that exchange the first instance of collateral for the second instance of collateral are executed in response to receiving the request to exchange the first instance of collateral for the second instance of collateral.

Clause 7 - The system of any of clauses 1-6, wherein the first digital asset type is a first central bank digital currency and the second digital asset type is a second central bank digital currency.

Clause 8 - A method, comprising receiving, by an exchange application, a first request to exchange central bank digital currencies (CBDCs) within a collateral account from a first CBDC denomination to a second CBDC denomination; obtaining, by the exchange application from a market application, an exchange rate that can be used to calculate an exchange between the first CBDC denomination and the second CBDC denomination; identifying, by the exchange application, a first amount of the first CBDC denomination within the collateral account; calculating, by the exchange application, a second amount of the second CBDC denomination; obtaining, by the exchange application, the second amount of the second CBDC denomination; crediting, by the exchange application to the collateral account, the second amount of the second CBDC denomination; and debiting, by the exchange application from the collateral account, the first amount of the first CBDC denomination.

Clause 9 - The method of clause 8, wherein obtaining the second amount of the second CBDC denomination further comprises at least sending, by the exchange application to the market application, a purchase request for the second amount of the second CBDC denomination; and receiving, by the exchange application from the market application and in response to sending the purchase request, a purchase response including at least the second amount of the second CBDC denomination.

Clause 10 - The method of clause 8 or 9, wherein the market application is representative of a decentralized non-custodial liquidity market and the purchase request is compliant with a decentralized non-custodial liquidity market protocol.

Clause 11 - The method of any of clauses 8-10, wherein the collateral account includes a first wallet address for the first CBDC denomination on a CBDC network, the exchange application includes a second wallet address for the first CBDC denomination on the CBDC network, and debiting the first amount of the first CBDC denomination further comprises at least generating, by the exchange application, a CBDC transfer from the first wallet address to the second wallet address; and transmitting, by the exchange application to the CBDC network, the CBDC transfer.

Clause 12 - The method of any of clauses 8-10, wherein the collateral account includes a first wallet address for the second CBDC denomination on a CBDC network, the exchange application includes a second wallet address for the second CBDC denomination on the CBDC network, and crediting the second amount of the second CBDC denomination further comprises at least generating, by the exchange application, a CBDC transfer from the first wallet address to the second wallet address; and transmitting, by the exchange application to the CBDC network, the CBDC transfer.

Clause 13 - The method of any of clauses 8-12, wherein debiting the first amount of the first CBDC denomination is performed in response to crediting the second amount of the second CBDC denomination.

Clause 14 - The method of any of clauses 8-13, wherein calculating the second amount of the second CBDC denomination is performed by at least multiplying the first amount by the exchange rate.

Clause 15 - A non-transitory, computer-readable medium, comprising machine-readable instructions that, when executed by a processor of a computing device, cause the computing device to at least receive a first request to exchange central bank digital currencies (CBDCs) within a collateral account from a first CBDC denomination to a second CBDC denomination; obtain, from a market application, an exchange rate that can be used to calculate an exchange between the first CBDC denomination and the second CBDC denomination; identify a first amount of the first CBDC denomination within the collateral account; calculate a second amount of the second CBDC denomination; obtain the second amount of the second CBDC denomination; credit, to the collateral account, the second amount of the second CBDC denomination; and debit, from the collateral account, the first amount of the first CBDC denomination.

Clause 16 - The non-transitory, computer-readable medium of clause 15, wherein the machine-readable instructions that obtain the second amount of the second CBDC denomination, when executed by the processor, further cause the computing device to at least send, to the market application, a purchase request for the second amount of the second CBDC denomination; and receive, from the market application and in response to sending the purchase request, a purchase response including at least the second amount of the second CBDC denomination.

Clause 17 - The non-transitory, computer-readable medium of clause 16, wherein the market application is representative of a decentralized non-custodial liquidity market and the purchase request is compliant with a decentralized non-custodial liquidity market protocol.

Clause 18 - The non-transitory, computer-readable medium of any of clauses 15-17, wherein the collateral account includes a first wallet address for the first CBDC denomination on a CBDC network, the non-transitory, computer-readable medium includes a second wallet address for the first CBDC denomination on the CBDC network, and the machine-readable instructions that debit the first amount of the first CBDC denomination, when executed by the processor, further cause the computing device to at least generate a CBDC transfer from the first wallet address to the second wallet address; and transmit, to the CBDC network, the CBDC transfer.

Clause 19 - The non-transitory, computer-readable medium of any of clauses 15-17, wherein the collateral account includes a first wallet address for the second CBDC denomination on a CBDC network, the non-transitory, computer-readable medium includes a second wallet address for the second CBDC denomination on the CBDC network, and the machine-readable instructions that credit the second amount of the second CBDC denomination, when executed by the processor, further cause the computing device to at least generate a CBDC transfer from the first wallet address to the second wallet address; and transmit, to the CBDC network, the CBDC transfer.

Clause 20 - The non-transitory, computer-readable medium of any of clauses 15-19, wherein the machine-readable instructions that calculate the second amount of the second CBDC denomination are executed in response to crediting the second amount of the second CBDC denomination.

## Claims

1. A system, comprising:
a computing device comprising a processor and a memory; and
machine-readable instructions stored in the memory that, when executed by the processor, cause the computing device to at least:
receive a request to generate a collateralized instrument, the collateralized instrument being associated with a collateral account that comprises a first instance of collateral of a first digital asset type and the collateralized instrument being associated with a liquidation condition that corresponds to the first digital asset type;
generate the collateralized instrument associated with the collateral account, the collateralized instrument including the liquidation condition;
receive a request to exchange the first instance of collateral for a second instance of collateral, wherein the second instance of collateral is a second digital asset type;
exchange the first instance of collateral for the second instance of collateral; and
modify the liquidation condition of the collateralized instrument to correspond to the second digital asset type.

2. The system of claim 1, wherein the machine-readable instructions that generate the collateralized instrument, when executed by the processor, cause the computing device to at least:
generate a smart contract that is stored on a blockchain network, the smart contract being representative of the collateralized instrument, wherein the smart contract is configured to at least:
receive transfer requests to transfer digital collateral;
determine if the liquidation condition is met; and
receive condition modification requests to modify the liquidation condition.

3. The system of claim 2, wherein the machine-readable instructions that exchange the first instance of collateral for the second instance of collateral, when executed by the processor, cause the computing device to at least:
send, to the smart contract, a transfer request comprising the second instance of collateral; and
receive, from the smart contract, a transfer response comprising the first instance of collateral.

4. The system of claim 2 or 3, wherein the liquidation condition includes at least a condition that determines that a value of the first instance of collateral is less than a threshold value.

5. The system of claim 4, wherein the threshold value is a first threshold value and the machine-readable instructions that modify the liquidation condition of the collateralized instrument, when executed by the processor, cause the computing device to at least:
calculate a second threshold value based on an exchange rate between the first digital asset type and the second digital asset type; and
send, to the smart contract, a condition modification request comprising an identifier for the second digital asset type and a second threshold value.

6. A method, comprising:
receiving, by an exchange application, a first request to exchange central bank digital currencies, CBDCs, within a collateral account from a first CBDC denomination to a second CBDC denomination;
obtaining, by the exchange application from a market application, an exchange rate that can be used to calculate an exchange between the first CBDC denomination and the second CBDC denomination;
identifying, by the exchange application, a first amount of the first CBDC denomination within the collateral account;
calculating, by the exchange application, a second amount of the second CBDC denomination;
obtaining, by the exchange application, the second amount of the second CBDC denomination;
crediting, by the exchange application to the collateral account, the second amount of the second CBDC denomination; and
debiting, by the exchange application from the collateral account, the first amount of the first CBDC denomination.

7. The method of claim 6, wherein obtaining the second amount of the second CBDC denomination further comprises at least:
sending, by the exchange application to the market application, a purchase request for the second amount of the second CBDC denomination; and
receiving, by the exchange application from the market application and in response to sending the purchase request, a purchase response including at least the second amount of the second CBDC denomination.

8. The method of claim 6 or 7, wherein the market application is representative of a decentralized non-custodial liquidity market and the purchase request is compliant with a decentralized non-custodial liquidity market protocol.

9. The method of any of claims 6-8, wherein the collateral account includes a first wallet address for the first CBDC denomination on a CBDC network, the exchange application includes a second wallet address for the first CBDC denomination on the CBDC network, and debiting the first amount of the first CBDC denomination further comprises at least:
generating, by the exchange application, a CBDC transfer from the first wallet address to the second wallet address; and
transmitting, by the exchange application to the CBDC network, the CBDC transfer.

10. The method of any of claims 6-8, wherein the collateral account includes a first wallet address for the second CBDC denomination on a CBDC network, the exchange application includes a second wallet address for the second CBDC denomination on the CBDC network, and crediting the second amount of the second CBDC denomination further comprises at least:
generating, by the exchange application, a CBDC transfer from the first wallet address to the second wallet address; and
transmitting, by the exchange application to the CBDC network, the CBDC transfer.

11. A computer-readable medium, comprising machine-readable instructions that, when executed by a processor of a computing device, cause the computing device to at least:
receive a first request to exchange central bank digital currencies, CBDCs, within a collateral account from a first CBDC denomination to a second CBDC denomination;
obtain, from a market application, an exchange rate that can be used to calculate an exchange between the first CBDC denomination and the second CBDC denomination;
identify a first amount of the first CBDC denomination within the collateral account;
calculate a second amount of the second CBDC denomination;
obtain the second amount of the second CBDC denomination;
credit, to the collateral account, the second amount of the second CBDC denomination; and
debit, from the collateral account, the first amount of the first CBDC denomination.

12. The computer-readable medium of claim 11, wherein the machine-readable instructions that obtain the second amount of the second CBDC denomination, when executed by the processor, further cause the computing device to at least:
send, to the market application, a purchase request for the second amount of the second CBDC denomination; and
receive, from the market application and in response to sending the purchase request, a purchase response including at least the second amount of the second CBDC denomination.

13. The computer-readable medium of claim 12, wherein the market application is representative of a decentralized non-custodial liquidity market and the purchase request is compliant with a decentralized non-custodial liquidity market protocol.

14. The computer-readable medium of any of claims 11-13, wherein the collateral account includes a first wallet address for the first CBDC denomination on a CBDC network, the non-transitory, computer-readable medium includes a second wallet address for the first CBDC denomination on the CBDC network, and the machine-readable instructions that debit the first amount of the first CBDC denomination, when executed by the processor, further cause the computing device to at least:
generate a CBDC transfer from the first wallet address to the second wallet address; and
transmit, to the CBDC network, the CBDC transfer.

15. The computer-readable medium of any of claims 11-13, wherein the collateral account includes a first wallet address for the second CBDC denomination on a CBDC network, the non-transitory, computer-readable medium includes a second wallet address for the second CBDC denomination on the CBDC network, and the machine-readable instructions that credit the second amount of the second CBDC denomination, when executed by the processor, further cause the computing device to at least:
generate a CBDC transfer from the first wallet address to the second wallet address; and
transmit, to the CBDC network, the CBDC transfer.
